# EUROPEAN PATENT APPLICATION

(11) **EP 1 211 639 A2**
(43) Date of publication of application: **05.06.2002**
(21) Application number: 01306361.5
(22) Date of filing: 25.07.2001
(51) Int. Cl.: G06T 5/00

(54) **Method and apparatus for extracting object from video image**

(30) Priority: 26.07.2000 JP 2000225735
(71) Applicant: Kabushiki Kaisha Toshiba, Tokyo 105-8001 (JP)
(72) Inventor: Ida, Takashi, C/O Toshiba Kabushiki Kaisha, Minato-ku, Tokyo 105-8001 (JP); Hori, Osamu, C/O Toshiba Kabushiki Kaisha, Minato-ku, Tokyo 105-8001 (JP); Kaneko, Toshimitsu, C/O Toshiba Kabushiki Kaisha, Minato-ku, Tokyo 105-8001 (JP); Yamamoto, Koji, C/O Toshiba Kabushiki Kaisha, Minato-ku, Tokyo 105-8001 (JP); Masukura, Koichi, C/O Toshiba Kabushiki Kaisha, Minato-ku, Tokyo 105-8001 (JP); Mita, Takeshi, C/O Toshiba Kabushiki Kaisha, Minato-ku, Tokyo 105-8001 (JP)
(74) Representative: Granleese, Rhian Jane

(57) **Abstract**

An object extraction method comprises generating alpha data for each frame, determining an overwrite enable mode and an overwrite disable mode for each frame, setting one of the overwrite enable mode and the overwrite disable mode to the alpha data in accordance with a result of the determining, and overwriting new alpha data on the alpha data set to the overwrite enable mode.

## Description

The present invention relates to a method and apparatus for extracting an object from a video image by generating alpha data that represents an object region in the video image for each frame.

A technique for automatically extracting an object from a video image is effective for editing and processing the video image for each object or replacing a background of the video image with another background.

In general, when an object region is extracted from a video image, an image that an object region and a background region differs in a pixel value (alpha value) from each other is provided together with an original image. Image data including such alpha value is referred to as alpha data. The processing for generating such alpha data for each frame is referred to as object extraction. The alpha data may be data other than original video image data or may be configured so as to be contained in the original video image data. In the latter case, a format for setting a value A (alpha value) as well as values R, G, and B is often employed for each image.

A conventional object extraction technique uses a chroma key method. In the chroma key method, a color registered in advance is defined as a background color. In addition, a region for a pixel having a color close to the background color in video image data is determined as a background region, and a region for a pixel of the other color is determined as an object region, respectively. Image processing software called "premier" available from Adobi Corporation is provided with a function for extracting an object from a video image by means of the chroma key method.

In the case where object extraction is carried out by using this function, a frame image is first displayed. Then, a user clicks a pixel on that background, thereby registering the background color. Next, threshold values for determining whether or not the video image data is a background are set, and then, an object is automatically extracted for each frame from the entire video image sequence by employing the threshold values and background color. However, in the chroma key method, there is a problem that a plenty of colors exist on the background of an object image to be processed or an object cannot be correctly extracted if the object includes the same color as the background.

In order to eliminate a disadvantage with such chroma key method, a method for extracting an object on an arbitrary background includes a method called a hybrid method using a differential method and a block matching method, disclosed in "Object extraction using frame difference and block matching in moving image" (Sanbonsugi, Ida, Watanabe, Fifth Image Sensing Symposium, A Collection of Lectures and Papers, C-4, pp. 66-66, June, 1999). In this hybrid method, alpha data on a desired object to be extracted by a user is first set in the first frame of a video image by manual operation. In the second frame or subsequent, alpha data is automatically generated while motion of an object or the like is traced based on alpha data on the first set frame. At this time, the user sets by manual operation a search range of a motion vector for motion detection or an extraction parameter such as threshold values for determining an object or a background, the threshold values being set relevant to a frame difference.

In object extraction employing the hybrid method, like the previously described "premier", there is assumed a method for setting an extraction parameter in the first frame, and performing object extraction by employing the same parameter in the second frame or subsequent. In this method, although object extraction can be precisely performed from an initial frame to a certain frame, such object extraction may not be correctly performed in the subsequent frames after the certain frame. This is because, in an image having such an arbitrary background targeted by the hybrid method, an extraction parameter required for object extraction is changed due to frame passing.

Therefore, in a method for performing object extraction by utilizing the extraction result of the previous frame or an object motion like a hybrid method, it is required to retry extraction by switching an extraction parameter for a frame at which extraction has failed and to overwrite alpha data. However, even if object extraction is carried out with another extraction parameter with respect to a frame at which object extraction has failed with one extraction parameter, correct extraction is not always performed. A frame at which object extraction has been correctly performed may be overwritten by alpha data on which extraction has failed. In particular, in an object extraction method utilizing alpha data on a frame other than a currently processed frame and an object motion, even if the same extraction parameters are set, the object extraction result in the currently processed frame is changed depending on a state of alpha data on another frame. Therefore, even if such extraction parameter is merely stored and maintained, it does not mean that the already obtained alpha data can always be reproduced.

As has been described above, in an object extraction technique in a conventional video image in which object extraction is carried out by employing the extraction parameter set in the first frame in the second frame or subsequent, thereby generating alpha data, and, when object extraction has failed, the generated data is overwritten on alpha data that has already been obtained by extracting again the extraction parameter after changed, the already correctly object extracted frame has been overwritten and lost by the alpha data on which extraction has failed.

It is an object of the present invention to provide a method and apparatus for extracting an object from a video image.

According to an aspect of the present invention, there is provided a method for extracting an object from a video image including an object and a background, comprising: performing an object extraction by generating alpha data in units of one frame using the video image, the alpha data representing an object region including the object; setting manually one of an overwrite enable mode and an overwrite disable mode to the alpha data, the overwrite enable mode being for permitting overwriting and the overwrite disable mode for inhibiting overwriting; and detecting the overwrite enable mode and the overwrite disable mode in units of one frame.

According to a second aspect of the present invention, there is provided an apparatus which extracts an object from a video image including an object and a background, comprising: an object extraction device configured to perform an object extraction by generating alpha data in units of one frame using the video image, the alpha data representing an object region including the object; a designation device configured to manually designate one of an overwrite enable mode and an overwrite disable mode to each of a plurality of frames of the video image, the overwrite enable mode being for permitting overwriting and the overwrite disable mode for inhibiting overwriting; and a device configured to perform an overwrite or an overwrite inhibit in accordance with the mode designated by designation device.

The present invention can be implemented either in hardware or on software in a general purpose computer. Further the present invention can be implemented in a combination of hardware and software. The present invention can also be implemented by a single processing apparatus or a distributed network of processing apparatuses.

Since the present invention can be implemented by software, the present invention encompasses computer code provided to a general purpose computer on any suitable carrier medium. The carrier medium can comprise any storage medium such as a floppy disk, a CD ROM, a magnetic device or a programmable memory device, or any transient medium such as any signal e.g. an electrical, optical or microwave signal.

This summary of the invention does not necessarily describe all necessary features so that the invention may also be a sub-combination of these described features.

The invention can be more fully understood from the following detailed description when taken in conjunction with the accompanying drawings, in which:
Fig. 1 is a block diagram depicting a schematic configuration of an apparatus for extracting an object in a video image from a video image according to one embodiment of the present invention;
Fig. 2 is a view showing a display screen example during object extraction in a video image according to the same embodiment;
Fig. 3 is a flow chart showing a processing example after alpha data on the first frame has been generated according to the same embodiment;
Fig. 4 is a flow chart showing another processing example after alpha data on the first frame has been generated according to the same embodiment;
Fig. 5 is a flow chart showing a processing example of alpha data generation according to the same embodiment;
Fig. 6 is a flow chart showing another processing example of alpha data generation according to the same embodiment;
Figs. 7A and 7B are views illustrating an alpha data setting method in which a contour is set and modified at an alpha data setting device according to the same embodiment;
FIG. 8 is a view illustrating an alpha data setting method employing a template at an alpha data setting device according to the same embodiment;
FIGS. 9A and 9B are views illustrating another example of an overwrite mode setting method at a mode setting device according to the same embodiment;
FIG. 10 is a view illustrating a method for generating alpha data by employing a plurality of different extraction parameters according to the same embodiment; and
FIG. 11 is a view illustrating a method for generating alpha data by inputting an object motion direction.

There will now be described the embodiment of the present invention with reference to the accompanying drawings.

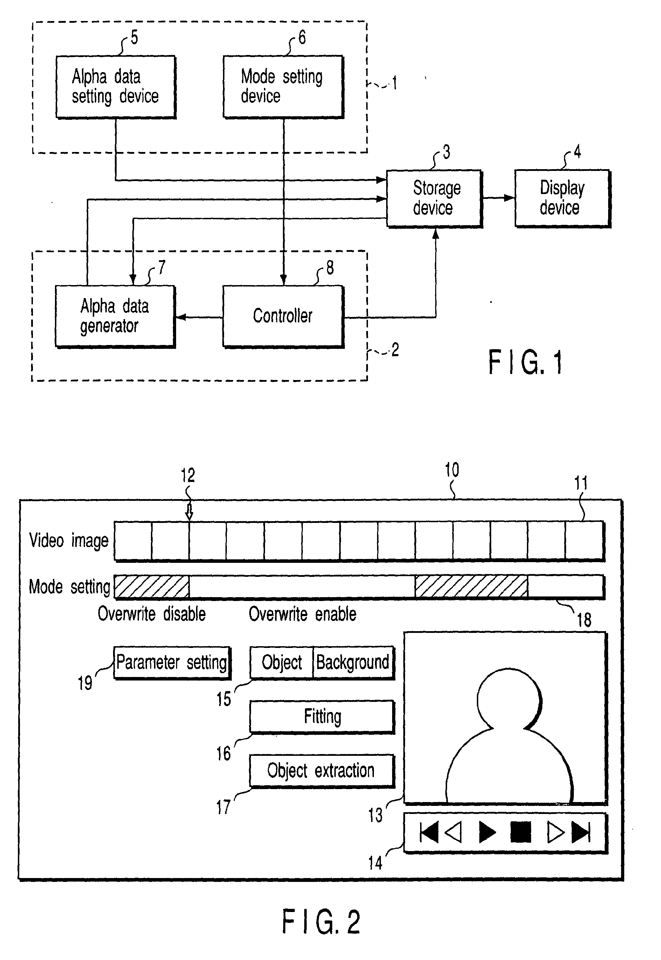

FIG. 1 shows a configuration of an object extracting apparatus which extracts an object in a video image according to one embodiment. This object extracting apparatus comprises a personal computer, for example. This apparatus comprises an input device 1 that contains a pointing device such as a keyboard and a mouse (not shown), a CPU 2, a storage device 3 such as a hard disk device or a semiconductor memory, and a display device 4 such as a liquid crystal display or a CRT monitor.

In addition, in FIG. 1, the object extracting apparatus includes an alpha data setting device 5 and a mode setting device 6 in the input device 1, and an alpha data generator 7 and a controller 8 in the CPU 2. That is, the input device 1 has the functions of the alpha data setting device 5 and mode setting device 6, and the CPU 2 has the functions of the alpha data generator 7 and the controller 8.

The alpha data setting device 5 is manually operated by a user to set alpha data on the first frame, for example, of a video image. The set alpha data is written in the storage device 3 under the control of the controller 8. The mode setting device 6 is manually or automatically operated to set either of the overwrite enable mode or overwrite disable mode to the controller 8 for each frame of a video image. The alpha data generator 7 generates alpha data on the currently processed frame using alpha data on the already processed frame stored in the storage device 3 under the control of the controller 8. The controller 8 controls the alpha data generator 7 and write / read operation of the storage device 3.

FIG. 2 shows a display screen 10 of the display device 4 during extraction of an object in a video image. The display screen 10 displays a video display lane 11, a frame pointer 12, a video display window 13, a display frame switching button group 14, an alpha data setting button 15, a fitting button 16, an object extraction button 17, a mode setting lane 18, and a parameter setting lane 19.

The video display lane 11 displays a plurality of thumb nails in order of frames of a video image, each of the thumb nails being formed by reducing in size each of the video frames. When the number of frames is large, the thumb nails are displayed by being properly skipped. The thumb nail at a position indicated on the video display lane 11 by the frame pointer 12 is enlarged and displayed on the video display window 13. By clicking any button of the display frame switching button group 14, operations such as video play, stop, feed forward by one frame, feed back by one frame, move to initial frame, and move to last frame can be performed on the video display window 13, and accordingly, the frame pointer 12 automatically moves as well.

A frame image displayed on the video display window 13 is changed by transversely dragging the frame pointer 12. While the first frame (a frame at the left end of the video display lane 11) is enlarged and displayed on the video display window 13, the alpha data setting button 15 is clicked for input switching of two types of object input and background input. In this manner, an object pen or a background pen is selected, and the object region or background region is painted on the video display window 13 by the user using the object pen or background pen. This corresponds to a setting operation at the alpha data setting device 5, whereby rougher alpha data is set.

Next, by clicking a fitting button 16, the contour of alpha data is fitted to that of an object in a video image by means of a self-similar model. Then, by clicking an object extraction button 17, alpha data on subsequent frames is generated by means of the hybrid method. Based on the thus generated alpha data, an extracted object image is displayed in the video display window 13. This extracted object image is produced by painting the background portion with a predetermined color or by semi-transparently painting it with a predetermined color. At this time, the thumb nail displayed on the video display lane 11 is also switched to an extracted object image instead of an original video image in order from the left, and the frame pointer 12 moves accordingly. When the extracted object image reaches the last frame, object extraction terminates.

At this stage, object extraction is not always successful in all frames. Thus, a user displays the extracted object image using the frame pointer 12 or the like, and checks the display result. A frame or frames at an interval during which object extraction have succeeded are specified by dragging a mouse on the mode setting lane 18, and the overwrite disable mode is set on the mode setting lane 18 as indicated by the slash area. The overwrite enable mode is set to a frame or frames at an interval during which the other object extraction has not succeeded. This corresponds to operation at the mode setting device 6 of FIG. 1.

In a method for generating alpha data on the currently processed frame using alpha data on the already processed frame, once object extraction fails, such failure affects the subsequent frames. There is a tendency that object extraction fails sequentially. Therefore, an interval during which the object extraction has succeeded and an interval during which the object extraction has failed often continue as indicated at the interval of the overwrite disable mode and the interval of the overwrite enable mode in FIG. 2.

Next, the user displays the first frame in which the object extraction has failed on the video display window 13, and corrects the first frame by using an object pen or background pen selected by the alpha data setting button 15 or the fitting button 16. Then, the alpha data of the subsequent frames is automatically generated by clicking an object extraction button 17 again, and alpha data on the overwrite enable mode frame is overwritten on the storage device 3. In this case, since the first frame in which object extraction has failed is corrected, the object extraction can be carried out correctly in the subsequent frames at a high probability.

To alleviate manual operation when an overwrite disable mode is set, there may be employed a method of automatically setting a frame in which object extraction is assumed to have succeeded to an overwrite disable mode. For example, with respect to a frame in which an error occurring in motion vector detection in a hybrid method is small, influence caused by the motion is a little, or a difference in pixel values at both ends of an object contour is large, it is assumed that object extraction has succeeded. In this time, the current mode is automatically set to the overwrite disable mode. The user checks whether the setting result is correct by referring to a display of the mode setting lane 18, and properly modifies the result if it is incorrect.

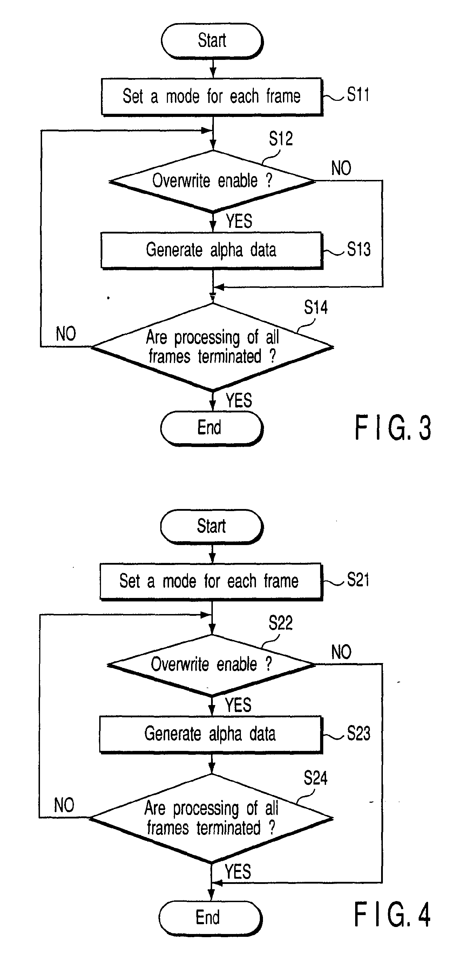

Now, various procedures for extracting an object in a video image according to the present embodiment will be described with reference to the flow charts shown in FIGS. 3 to 6.

FIG. 3 shows processing after alpha data on the first frame of a video image has been set by the alpha data setting device 5. The alpha data on all the frames of a video image to be processed is generated by the alpha data generator 7, and is stored in the storage device 4. Initially, all frames are set to the overwrite enable mode. The overwrite disable mode is selectively set the frames of the video image (step S11). Specifically, for example, the user checks how well alpha data is produced from an object image displayed by the alpha data on the video display window 13 of the display screen 10 shown in FIG. 2. The frame in which object extraction is correctly made is set to the overwrite disable mode. Otherwise, the frame or frames in which object extraction is not correctly is maintained to the overwrite enable mode. A specific technique for such mode setting will be described later in detail.

In another mode setting method at the step S11, mode setting may be automatically carried out so as to set to the overwrite disable mode a frame in which a motion vector detection error in a hybrid method is small, the motion is small, or a difference in pixel values at both ends of an object contour is large. The frame other than the above frame is maintained to the overwrite enable mode.

Next, when it has been determined at the controller 8 that the first frame of a video image is maintained to the overwrite enable mode (step S12), alpha data on the frame is generated by the alpha data generator 7 (step S13). In contrast, when it is determined that the overwrite disenable mode is to be set to the frame at the step S12, processing goes to the step S14. In other words, it is determined whether or not processing of all the frames has terminated. If an unprocessed frame still remains, the next frame is defined as a currently processed frame, and processing of the steps S12 to S14 is repeated. In this manner, the second frame and subsequent are sequentially processed. When the last frame is determined at the step S14, processing for extracting an object in a video image terminates.

In FIG. 4, as in FIG. 3, there is shown that alpha data on the first frame of a video image is set by the alpha data setting device 5, and further, alpha data on all the frames of a video image to be processed is generated by the alpha data generator 7, and is stored in the storage device 4. In procedures of FIG. 4, mode setting processing (step S21), overwrite enable / disable determination processing (step S22), alpha data generation processing (step S23), and termination determination processing (step S24) are basically similar to those in FIG. 3. In FIG. 4, when the overwrite disable mode is determined at the step S22, processing is not advanced to the next frame. Even if a frame remains, processing for extracting an object in a video image can be automatically terminated.

According to the procedures in FIG. 4, when the object extraction is carried out from only frames during a certain interval, the interval during which the object extraction is to be performed is maintained to the overwrite enable mode. As a result, the object extraction processing can be automatically terminated at the time when the end of the interval is reached.

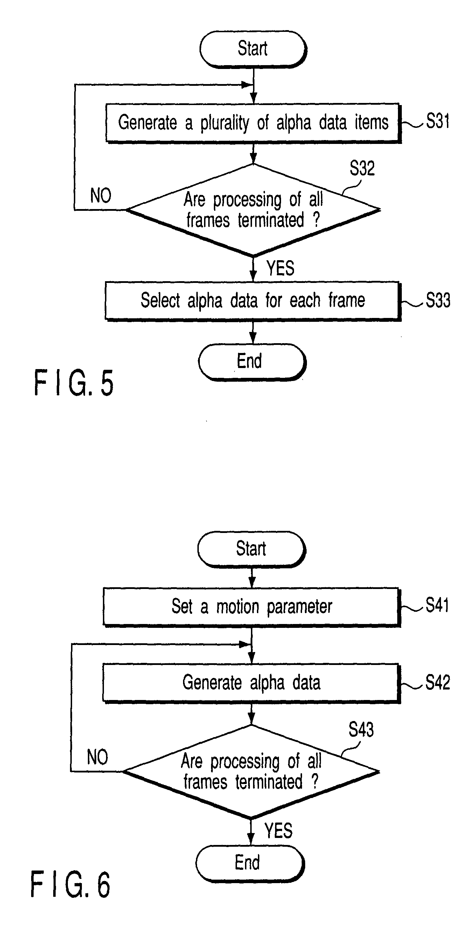

FIG. 5 shows alpha data generation processing at the alpha data generator 7. First, a plurality of alpha data are generated for each frame at a time using a plurality of different extraction parameters such as threshold values for determining an object or a background (step S31). Next, it is determined whether or not alpha data generation processing for all the frames has terminated (step S32). When a frame in which alpha data is unprocessed still remains, processing of the step S31 is repeated using the next frame as a frame to be currently processed. When the last frame is determined at the step S32, alpha data selected one by one by the user, for example, from among a plurality of alpha data generated for each frame is finally used for subsequent processing as an output of the alpha data generator 7.

FIG. 6 shows another alpha data generation processing at the alpha data generator 7. First, a motion parameter used for the object extraction is set (step S41). The motion parameter is computed from the result obtained when the user has inputted on the display screen the direction and size of the motion of at least one of the object, the background and the entire of the video image. A method of setting this motion parameter will be described later in detail.

Next, alpha data is generated using the motion parameter set at the step S41 (step S42). Then, it has been determined whether or not alpha data generation processing for all frames has terminated (step S43). When a frame in which alpha data is unprocessed still remains, the next frame is defined as a currently processed frame, and processing of the step S42 is repeated, whereby alpha data on all the frames is generated using the set motion parameter.

Now, an alpha data setting method performed in the alpha data setting device 5 will be described here. The method of setting alpha data includes displaying an image of the first frame on the video display window 13 of the display screen 10, painting a desired object in the image by a mouse pointer or the like while the user refers to this image, and setting alpha data indicating the painted region as an object region.

In such painted region, the image of an object in the painted region can be checked by semi-transparently displaying the painted color. Thus, there is an advantage that alpha data in a desired object region can be reliably generated. Instead of coloring an object region, an object image can be well recognized by coloring a background region.

In addition, when an operation for precisely painting an object along its contour is complicated, rough painting is carried out, and the contour of alpha data is automatically fitted to the contour of an object using a self-similarity model method proposed by the present inventors in "Fitting Contour Line Using Self-Similarity Method" (Ida, Sanbonsugi, Fifth Image Sensing Symposium, A Collection of Lectures and Papers, c-15, pp. 115-120, June 1999), the contents of which are incorporated by reference. The alpha data can be set efficiently by the method.

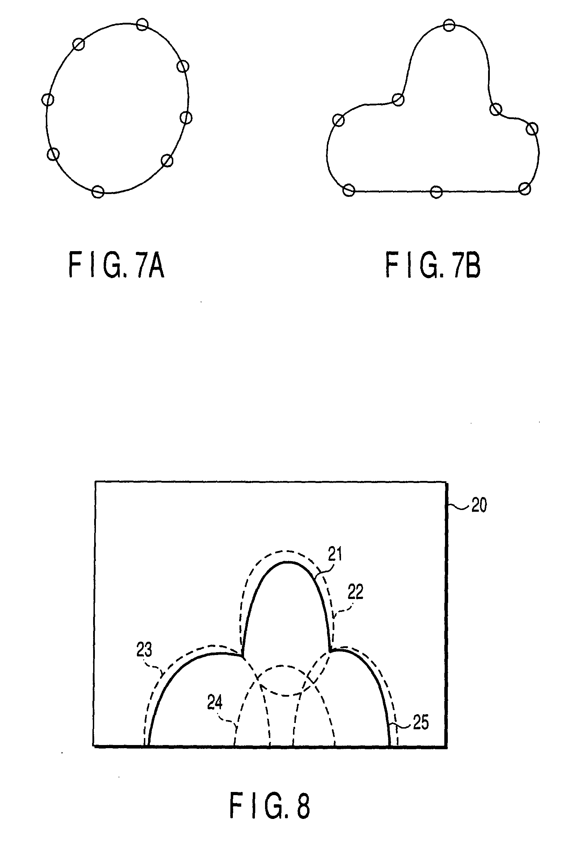

In another method of setting alpha data, as shown in FIG. 7A, a contour having control points (indicated by unpainted circles) is displayed, these control points are moved by being dragged by the mouse pointer, and the contour is modified so as to approximate a desired object, as shown in FIG. 7B, whereby alpha data can be set depending on the object shape. In this case, alpha data is set to the inside of the contour corresponding an object region. In addition, there may be employed a method in which the contours of the object are clicked one after another with proper intervals, whereby the clicked points are defined as control points, and then, the contours are set by smoothly linking them with spline curves or the like sequentially, whereby alpha data is set. With this method, alpha data can be comparatively simply set.

Further, as shown in FIG. 8, plural types of templates with their predetermined shape such as ellipse are provided in advance, and these templates are disposed so as to cover a portion of an object 21, whereby alpha data can be set. In an example of FIG. 8, the object 21 is covered with four ellipses 22, 23, 24, and 25. A region that overreaches the ellipse screen 20 is discarded. A combination of these ellipses 22, 23, 24, and 25 is defined as an object region, and fitting is carried out. In this case, for example, as shown in FIG. 8, in the case where an object is an upper half of a human body, fitting is automatically carried out without clicking a fitting button 16 at a moment when an ellipse 22 covering the head part is disposed on the object, whereby a work of disposing the ellipse can be advanced while checking the object extraction result.

Next, for example, when the elapse 23 is disposed on the object, fitting is carried out using the ellipse 23. A combination of the fitting result based on the elapse 23 and the previously obtained result based on the ellipse 22 is displayed as an object region. Hereinafter, this is applied to a case in which the ellipses 24 and 25 are disposed on the object. In this case, the resultant contour portion should be traced by an overwrite disable pen so that the contour portion is not changed during the subsequent processing. If alpha data corresponding to the contour portion traced by the overwrite disable pen is protected from overwriting, a precisely inputted contour is not mistakenly overwritten. It is desirable that such portion traced by the overwrite disable pen be colored semi-transparently with another color for clarity.

As has been described above, alpha data on the first frame is set by the alpha data setting device 5, and the set alpha data is written in the storage device 3. Then, the alpha data on the first frame and the video image data are read out from the storage device 3, and are sent to the alpha data generator 5. The alpha data generator 5 generates alpha data on the second frame and subsequent using the hybrid method described previously, for example.

That is, motion detection between frames of video image data read out from the storage device 3 is carried out, and modification and motion compensation are applied to alpha data of the processed frame based on the motion detection result, whereby alpha data based on the motion compensation is produced. At a time, a portion at which a frame difference between video image data read out from the storage device 3 is large is defined as an object region, whereby alpha data is produced based on such difference. More proper data is adaptively selected from among alpha data caused by motion compensation and alpha data caused by difference, whereby alpha data on the currently processed frame is finally generated.

With such a method, alpha data is sequentially generated for each frame, and is written into the storage device 3 as required. In addition, the alpha data is read out from the storage device 3 as required, and is displayed as an image at the display device 4.

In the alpha data generating method as described above, alpha data on all the frames is not always generated precisely one time. For example, object extraction may fail in some frame, and alpha data greatly different from that of an actual object may be generated. In such a case, after alpha data has been manually re-inputted using the alpha data setting device 5 in a frame in which object extraction has failed, object extraction is carried out again so as to overwrite alpha data stored in the storage device 3 in the frame in which object extraction has failed.

Here, with respect to alpha data on a frame in which an object region has been correctly extracted, the current mode is set to either of the overwrite enable mode and the overwrite disable mode for each frame by the user using the mode setting device 6 so as not to be overwrite the data in the storage device 3.

The mode set by the mode setting device 6 is determined at the controller 8. In a frame in which the overwrite enable mode has been set, although the alpha data on the frame set by the alpha data setting device 5 or generated by the alpha data generator 7 and stored in the storage device 3 is overwritten under the control of the controller 8, no overwriting is done in a frame in which the overwrite disable mode has been set.

The processing for generating alpha data is performed in order of frames by automatic extraction of an object region in the alpha data generator 7. When the processing reaches a frame set to the overwrite disable mode, such frame is skipped. Then, alpha data in the next frame set to the overwrite enable mode is generated (FIG. 3) or motion object extraction processing terminates there (FIG. 4). In addition, in a frame set to the overwrite disable mode, the object extraction processing is performed so that processing may be advanced assuming that the alpha data stored in the storage device 3 has been extracted in the frame.

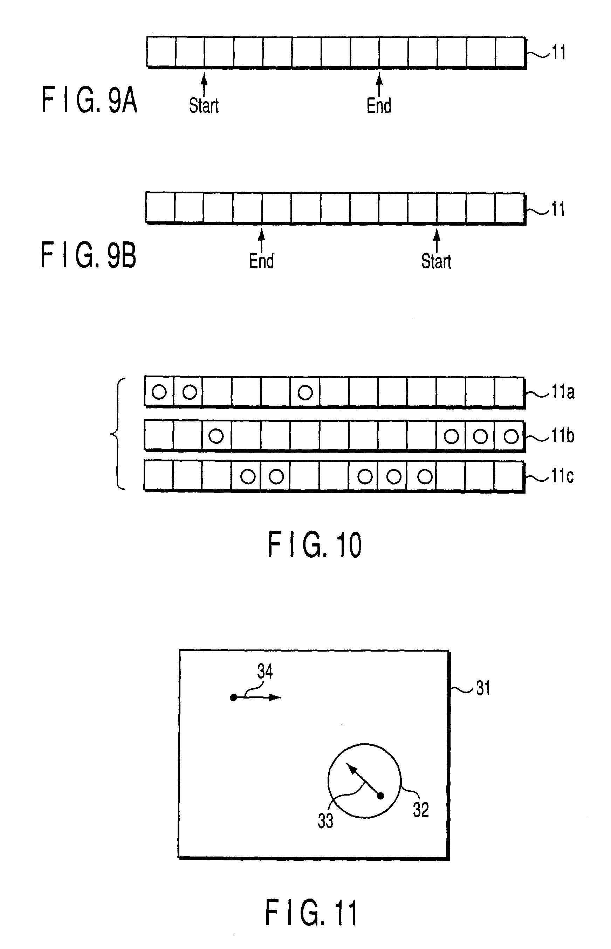

Now, another mode setting method at the mode setting device 6 will be described with reference to FIG. 9A and FIG. 9B. FIG. 9A and FIG. 9B each show an example when mode setting is carried out on the video display lane 11 without using the mode setting lane 18 as shown in FIG. 2. That is, as shown in FIG. 9A, an extraction start pointer and an extraction end pointer are set to the video display lane 11 by way of the user's instruction. Then, the frames between the extraction start pointer and extraction end pointer are maintained to an overwrite enable mode, and the other frame or frames are set to an overwrite disable mode. When the user clicks the object extraction button 17 shown in FIG. 2 in this state, object extraction starts from a frame indicated by the extraction start pointer, and object extraction ends at a frame indicated by the overwrite end pointer.

FIG. 9B shows an example when the extraction end pointer is set to a frame preceding the frame indicated by the extraction start pointer in respect of time. In this case, object extraction is carried out in reversed order from the frame time order.

In this way, for example, the overwrite enable start frame and the overwrite disable end frame may be specified by the extraction start pointer and the extraction end pointer. Alternatively, the overwrite disable start frame and overwrite enable start frame are specified, whereby the overwrite disable mode and overwrite enable mode can be set.

Now, another mode setting method performed by the mode setting device 6 will be described with reference to FIG. 10. according to the method, a plurality of video display lanes 11a, 11b and 11c are provided on the display screen as shown in FIG. 10. The object extraction has been carried out at a time using extraction parameters, each of which differs for each of the video display lanes 11a, 11b and 11c.

The extraction parameters used here include threshold values used when an object region or a background region is determined relevant to a motion vector search range or frame difference, for example, alpha data based on motion compensation, or threshold values used for adaptively selecting any of the alpha data based on such difference. If these extraction parameters are fixed, as has been described above, although an object region is correctly extracted in one frame, such extraction may fail in another frame.

Because of this, as shown in FIG. 10, the results obtained when an object has been detected using different extraction parameters are displayed in line on a plurality of different video image display lanes 11a 11b and 11c. The user selects a frame in which such an object has been extracted most precisely, from among the video display lanes 11a, 11b and 11c in units of frames, and clicks the selected frame for each lane. In FIG. 10, the selected frame is marked with the circle.

On the other hand, even in the case where an object can be extracted with a single extraction parameter, it may be difficult to find out an optimal extraction parameter because the image property does not change so much in all the frame. In contrast, for example, there is assumed a method for searching an optimal extraction parameter by making it possible to change such extraction parameter even partway of object extraction. The extraction parameter is manually changed by a parameter setting lane 19. The object extraction is carried out in the subsequent frames using the changed extraction parameter. The user searches an optimal value of extraction parameter by properly changing the extraction parameter while checking the extraction result during a first object extraction. According to this method, an extraction parameter can be dynamically changed, thus making it possible to find out the optimal extraction parameter within a short period of time. In the second extraction and subsequent, the current parameter value is fixed to such optimal extraction parameter, and extraction of all frames or a frame in which extraction has failed can be retried.

In the hybrid method, although a motion of the object or background is automatically detected, if the motion is identified in advance, information on motion direction is used during alpha data generation, whereby processing amount can be reduced or motion detection precision can be improved. In the alpha data generating procedures shown in FIG. 6, after the motion parameter has been set at the step S61 by applying this idea, alpha data is generated using this motion parameter.

FIG. 11 shows an example when the user inputs an object motion direction or the like during such alpha data generation. At a stage at which the first frame image is displayed, the user drags an object 32 with the mouse, and then, inputs a motion direction 33 of the object 32. In addition, in the case where the background 31 moves due to panning a camera for capturing a video image, a motion direction 34 of the background 31 is inputted simultaneously.

During object extraction, motion vector search is made for these motion directions 33 and 34 only, processing amount for motion detection can be reduced more remarkably than a case in which a motion vector search is made for all the directions. In addition, a motion vector is finely searched at the periphery of the inputted motion only, thereby enabling precise motion detection without increasing processing amount. As a result, the processing time for object extraction can be reduced, and extraction precision can be enhanced.

As has been described above, according to the present invention, an object in a video image is reliably extracted, whereby alpha data can be generated. In particular, in the case of performing object extraction with the hybrid method or the like, correct alpha data can be generated without overwriting alpha data in a frame in which object extraction has already succeeded.

## Claims

1. A method for extracting an object from a video image including an object and a background, **characterized by** comprising:
performing an object extraction by generating alpha data in units of one frame using the video image, the alpha data representing an object region including the object;
setting manually one of an overwrite enable mode and an overwrite disable mode to the alpha data, the overwrite enable mode being for permitting overwriting and the overwrite disable mode for inhibiting overwriting; and
detecting the overwrite enable mode and the overwrite disable mode in units of one frame.

2. A method according to claim 1, **characterized by** generating new alpha data for the alpha data set to the overwrite enable mode, overwriting the new alpha data on the alpha data set to the overwrite enable mode and inhibiting overwriting to the alpha data set to the overwrite disable mode.

3. A method according to claim 1, **characterized in that** the setting step includes displaying a video image display lane which displays a plurality of frames of the video image, and setting selectively the overwrite enable mode and the overwrite disable mode to the frames.

4. A method according to claim 3, **characterized in that** the setting step includes setting initially the overwrite enable mode to all the frames, and then changing selectively the overwrite enable modes on the frames to the overwrite disable mode in accordance with the result of the determining.

5. A method according to claim 3, **characterized by** terminating processing for extracting an object when the overwrite disable mode is determined.

6. A method according to claim 3, **characterized in that** the displaying step displays a plurality of thumb nails obtained by reducing the frames.

7. A method according to claim 6, **characterized in that** the displaying step displays a video display window which enlarges and displays a selected one of the thumb nails.

8. A method according to claim 7, **characterized in that** the displaying step displays the video display window with at least one of the object region and a background region corresponding to the background is painted with a color.

9. A method according to claim 3, **characterized in that** the displaying step displays the frames by selectively skipping them.

10. A method according to claim 3, **characterized in that** the displaying step displays a mode setting lane which indicates a frame range of the overwrite enable mode and the overwrite disable mode.

11. A method according to claim 1, **characterized in that** the setting step sets to the overwrite disable mode a frame in which a motion vector detection error is small, a motion is small, or a difference in pixel values at both ends of an object contour is large.

12. A method for extracting an object from a video image including an object and a background, **characterized by** comprising:
performing an object extraction by generating a plurality of alpha data corresponding to a plurality of frames of the video image using a plurality of different parameters representing threshold values for determining the object or the background; and
selecting one of the parameters for each of the frames.

13. A method for extracting an object from a video image including the object and a background, **characterized by** comprising:
inputting a motion parameter indicating a motion of at least one of the object, the background or an entire of the video image; and
performing an object extraction by generating alpha data for each of a plurality of frames of the video image, using the motion parameter.

14. An apparatus for extracting an object from a video image including an object and a background, comprising:
means (7) for performing an object extraction by generating alpha data in units of one frame using the video image, the alpha data representing an object region including the object;
means (6) for manually setting one of an overwrite enable mode and an overwrite disable mode to each of a plurality of frames of the video image, the overwrite enable mode being for permitting overwriting and the overwrite disable mode for inhibiting overwriting; and
means (8) for performing an overwrite or an overwrite inhibit in accordance with the mode set by the setting means.

15. An apparatus according to claim 14, **characterized in that** the setting means includes means (10) for displaying a video image display lane which displays a plurality of frames of the video image, and means (6) for selectively setting the overwrite enable mode and the overwrite disable mode to the frames.

16. An apparatus according to claim 15, **characterized in that** the displaying means (10) displays a plurality of thumb nails (11) obtained by reducing the frames.

17. An apparatus according to claim 16, **characterized in that** the displaying means (10) displays a video display window (13) which enlarges and displays a selected one of the thumb nails.

18. An apparatus according to claim 17, **characterized in that** the displaying means (10) displays the video display window (13) with at least one of the object region and a background region corresponding to the background is painted with a colour.

19. An apparatus according to claim 17, **characterized in that** the displaying means (10) displays a mode setting lane (18) which indicates ranges set to the overwrite enable mode and the overwrite disable mode, respectively.

20. A carrier medium carrying computer readable instructions for controlling the computer to carry out the method of any one of claims 1 to 13.
